Europäisches Patentamt

European Patent Office

Office européen des brevets

(11) Veröffentlichungsnummer: **0 204 971**
**B1**

(12) # EUROPÄISCHE PATENTSCHRIFT

(45) Veröffentlichungstag der Patentschrift:
**10.08.88**

(21) Anmeldenummer: **86106325.3**

(22) Anmeldetag: **09.05.86**

(51) Int. Cl.⁴: **B 62 D 11/08,** A 01 D 34/08,
A 01 B 69/00

(54) Einachsmotormäher.

(30) Priorität: **31.05.85 CH 2315/85**

(43) Veröffentlichungstag der Anmeldung:
**17.12.86 Patentblatt 86/51**

(45) Bekanntmachung des Hinweises auf die Patenterteilung:
**10.08.88 Patentblatt 88/32**

(84) Benannte Vertragsstaaten:
**AT CH DE FR IT LI**

(56) Entgegenhaltungen:
**EP-A-0 111 847
AT-A-322 994
CH-A-409 495
DE-A-3 102 143
US-A-3 316 773**

(73) Patentinhaber: **Rapid Maschinen und Fahrzeuge
AG, Heimstrasse 7, CH- 8953 Dietikon (CH)**

(72) Erfinder: **Keller, Beat, Austrasse 16, CH- 8951
Fahrweid (CH)**

(74) Vertreter: **Troesch, Hans Alfred, Dr. Ing.,
Walchestrasse 19, CH- 8035 Zürich (CH)**

## Beschreibung

Die vorliegende Erfindung betrifft einen Einachsmotormäher, insbesondere einen Breitspurmäher mit Lenkbremse.

Derartige Einachsmotormäher sind speziell für Arbeiten im Reversierbetrieb als sog. Heuer geeignet. Diese Maschinen sind normalerweise mit einem 2-Gang-Reversier getriebe ausgerüstet. Als Bedienungskomfort ist eine Lenkbremse eingebaut, welche ein leichtgängiges Steuern der Maschine, auch in schwierigen Geländeverhältnissen, gewährleistet. Die Funktion dieser Lenkhilfe ist folgende:

In ihrer Nullage, also bei Geradeausfahrt, sind beide Räder z.B. über Konuskupplungen starr mit dem Getriebe verbunden. Wird nun eine Richtungsänderung notwendig, so kuppelt man das auf der einzuschwenkenden Seite liegende Rad vom Getriebe durch Lösen der Konuskupplung ab. Das Rad ist jetzt in Freilaufflage. Um ein gezwungenes Schwenken der Maschine zu erreichen, kann das freiliegende Rad mittels einer unmittelbar hinter der Konuskupplung liegenden Konusbremse noch zusätzlich gebremst werden. Das dem gebremsten gegenüberliegende angetriebene Rad, welches starr mit dem Getriebe verbunden weiterläuft, schwenkt die Maschine um den Bodenauflage-Drehpunkt des gebremsten Rades.

Ist die neue Fahrrichtung erreicht, löst man die Konusradbremse und kuppelt es ans Getriebe. Das Rad ist wieder über die Konuskupplung mit dem Getriebe kraftschlüssig verbunden. Die Maschine läuft wieder geradeaus.

Die Schaltung der jeweiligen Lenkkupplung erfolgt über ein Hebelsystem. Dieses System kann auf verschiedene Arten betätigt werden, z.B. durch leichtes Schwenken des auf einem Drehpunkt gelagerten Führungsholms in die gewünschte Fahrrichtung, durch einen an einem fix gelagerten Holm befestigten schwenkbaren Hebel oder durch beidseitig des Holms angeordnete Kupplungshebel. Der Kraftangriff auf das Hebelsystem erfolgt bei der ersten Variante über ein Gestänge, bei den Varianten zwei und drei über Seilzüge.

Wenn mithin, um bei der Steuerung gemäss der ersten Variante zu bleiben, der Mäher nach links fahren soll, wird der Führungsholm nach rechts gedrückt, das linke Rad vom Getriebe abgekuppelt und gegebenenfalls gebremst, worauf das getriebene Aussenrad den Mäher auf einer Linkskurve bewegt.

Wird das Getriebe auf Rückwärtsfahrt reversiert, um beispielsweise auf der gleichen Linkskurve in die Ausgangslage zurückzufahren, wird rein gefühlsmässig der Führungsholm nicht in seiner bisherigen Rechtsaussen-Schwenklage gehalten, da dies dem normalen Lenkgefühl beim Rückwärtsfahren widerspricht. Der Führungsholm wird beim Rückwärtsbewegen auf der Linkskurve nach links ausgeschwenkt. Durch diese Bewegung wird das rechte Rad abgekuppelt und gegebenenfalls gebremst, so dass der Mäher eine Rechtskurve beschreibt, was unerwünscht ist.

Die lenksinngemässe Anordnung der Bedienungselemente ist mithin bei Reversierbetrieb nur in einer Richtung, z.B. Vorwärtsfahrt, möglich. Bei Retourfahrt widerspricht die Anordnung dem Lenksinn. Das Manövrieren wird unbequem und gefährlich.

Zum Stande der Technik gehört ein landwirtschaftliches Motorfahrzeug, insbesondere ein Einachsfahrzeug, mit mindestens einem Lenkholm und einem Radpaar, mit einzeln gebremsten Rädern. Dieses Fahrzeug weist einen quer zur Fahrtrichtung verschwenkbaren Bremshebel auf, dessen Bewegung nach der einen Seite die eine Radbremse und nach der anderen Seite die andere Radbremse betätigt. Bei dieser Maschine muss bei Richtungsänderungen, insbesondere beim Kurvenfahren, der Bremshebel entsprechend betätigt werden, wobei der Fahrer seine rechte Hand braucht, um die Maschine am Bremshebel zu führen, während er hinter den Lenkholmen marschiert. Er hält dabei das Fahrzeug ausschliesslich am Bremshebel.

Für die Rückwärtsfahrt dieses Fahrzeuges, beispielsweise einer Heuerntemaschine, wird der Bremshebel um 180° nach vorne umgelegt und der Bediener marschiert dabei neben den Lenkholmen und führt mit seiner linken Hand die Maschine am Bremshebel. Bei einer Kurvenfahrt drückt er den Bremshebel in die für die Fahrt vorgesehene Richtung, so dass das Rad auf dieser Seite gebremst wird und die Holme ebenfalls dieser Richtung folgen.

Diese Konstruktion erlaubt zwar sowohl beim vorwärts als auch beim Rückwärtsfahren auf krummer Bahn einen gleichen Krümmungssinn bei gefühlsmässiger Führung des Mähers sicherzustellen. Sie wird aber im Aufbau und der Bedienung nicht den verlangten Bedürfnissen gerecht, insbesondere beim Arbeiten mit dem Mähbalken, welcher bei Rückwärts fahrt oder beim Wenden meistens durch kräftiges Niederdrücken der Führungsholme ausgehoben wird. (CH-A 409 495)

Daher bezweckt die vorliegende Erfindung die Schaffung eines Einachsmotormähers mit im Aufbau und der Bedienung einfacheren Steuermitteln, um sowohl beim Vorwärts- als auch beim Rückwärtsfahren auf krummer Bahn einen gleichen Krümmungssinn bei sowohl gefühlsmässiger als auch handfester Führung mit beiden Händen an den zwei Handgriffen die Lenkung des Mähers sicherer zu gestalten.

In diesem Sinne zeichnet sich der erfindungsgemässe Einachsmotormäher durch den Wortlaut des kennzeichnenden Teiles des Anspruchs 1 aus.

Der Erfindungsgegenstand wird anschliessend beispielsweise anhand einer Zeichnung erläutert:

Es zeigen in rein schematischer Darstellung:

Fig. 1        eine Aufsicht auf einen
              Breitspureinachs-Motormäher, mit Lenkbremse und erfindungsgemässer Steuerung,

Fig. 2 ein fahrrichtungsgesteuertes Lenksystem im Vorwärtsgang in Linkskurve,

Fig. 3 das System analog Fig. 2 im Rückwärtsgang in Linkskurve,

Fig. 4 eine Aufsicht mit zwei Varianten des fahrrichtungsgesteuerten Lenksystems.

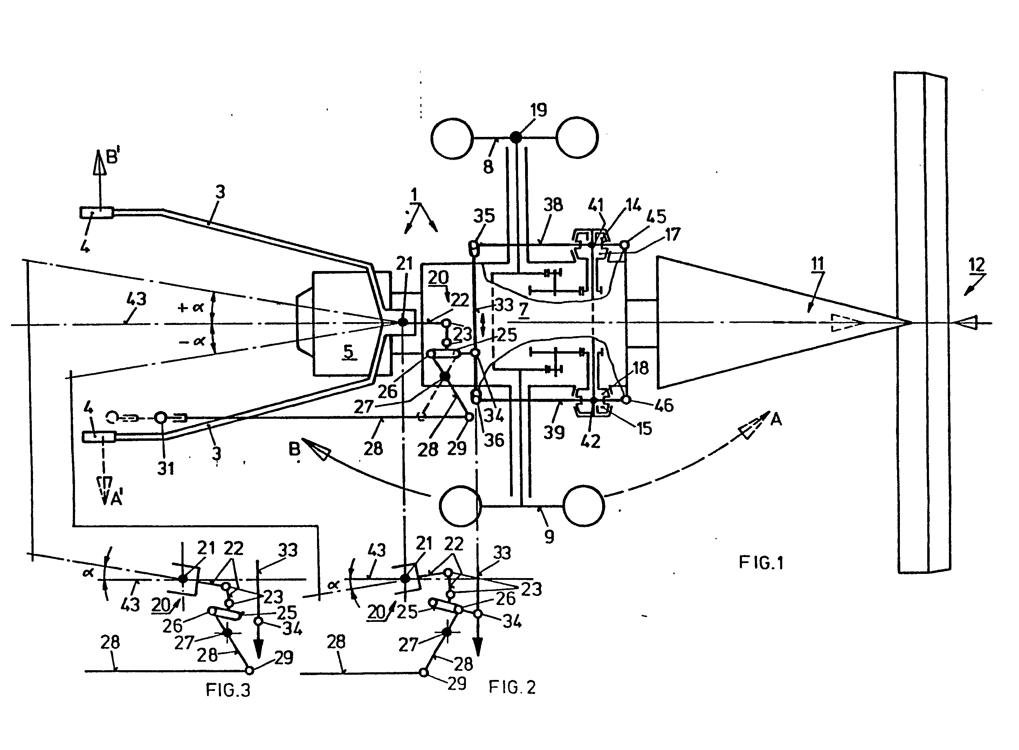

Fig. 1 zeigt in rein schematischer Darstellung eine Aufsicht auf einen Breitspureinachs-Motormäher 1, mit einem Führungsholm 3 und den beiden Handgriffen 4. Der Mäher ist durch einen Antriebsmotor 5 angetrieben, welcher Motor über ein Getriebe 7 auf die beiden Räder 8 und 9 wirkt, sofern diese entsprechend eingekuppelt sind. Das Getriebe 7 treibt ferner einen Zapfwellenantrieb 11, welcher den Mähbalken 12 bewegt.

Die Antriebsverbindung zwischen Getriebe 7 und den Rädern 8 und 9 erfolgt mittels je einer Konuskupplung 14 bzw. 15, denen je eine Konusradbremse 17 bzw. 18 zugeordnet ist. Der auf dem Boden aufliegende Punkt des Rades 8 ist hier als Drehpunkt 19 bezeichnet.

Das Zu- und Abkuppeln der beiden Räder 8 und 9 sowie das Betätigen der Konusradbremsen 17 und 18 erfolgt über ein Hebelsystem 20, das über eine Schwenkachse 21 bei der Ausführung gemäss Fig. 1 bis 3 durch den Führungsholm 3 gesteuert wird. Der Führungsholm 3 ist, wie ersichtlich, mit einem Gestänge 22 verbunden, welcher mit zwei Gelenken 23 ausgerüstet ist. Das Gestänge 22 betätigt eine Steuerkulisse 25, welche um eine Achse 26 schwenkbar ist. Die Schwenkachse 26 zur Steuerkulisse 25 ist mittels eines Getriebeschalthebels 28, der um eine Drehachse 27 schwenkbar ist, ein Gelenk 29 aufweist und mit einem Handgriff 31 verbunden, verschiebbar. Sie kann je nach Zuschaltung des Rückwärts- oder des Vorwärtsganges in die beiden dargestellten Lagen gestossen bzw. gezogen werden.

Die Steuerkulisse 25 ist über ein Gelenk 34 mit einer Zugstange 33 verbunden, deren Enden mit einem Mitnehmerring 35 und 36 ausgerüstet sind. Die Ringe 35 und 36 sind schwenkverschiebbar mit Kupplungs- und Bremshebeln 38 und 39 verbunden, welche ihrerseits in Schwenklagern 45 gelagert sind und gelenkig mit den entsprechenden Konuskupplungen 14 bzw. 15 und Radbremsen 17 bzw. 18 zusammenwirken.

Soll der Einachsmotormäher 1 in Vorwärtsfahrt in Richtung A, d.h. auf eine Linkskurve gelenkt werden, erfolgt eine Schwenkbewegung des Holmes 3 in Richtung A'. Dabei befindet sich der Handgriff 31 in seiner Auszugslage, wie gestrichelt in Fig. 1 dargestellt. Die Schwenkbewegung des Holmes 3 hat zur Folge, dass im Sinne der Fig. 2 die Zugstange 33 gegen das äussere Rad 9 hin verschoben wird, so dass der Kupplungs- und Bremshebel 38 um das Gelenk 41 im Gegenuhrzeigersinn bewegt und damit die Konuskupplung 14 gelöst wird. Erfolgt das Ausschwenken des Führungsholmes 3 in seine Extremlage, wie dies der winkel -α in Fig. 1 zeigt, so erfolgt gleichzeitig das Einpressen der Konusradbremse 17 und das Innenrad 8 wird nicht nur vom Getriebe 7 abgekuppelt, sondern zusätzlich durch die Konusradbremse 17 gebremst.

Gleichzeitig bleibt infolge der Leerbewegung des Mitnahmeringes 36 keine Schwenkbewegung des Kupplungs- und Bremshebels 39, so dass das Rad 9 für die Konuskupplung 15 mit dem Getriebe verbunden bleibt und den Mäher antreibt. Der Mäher beschreibt eine Linkskurve A (gestrichelt).

Soll nun der Einachsmotormäher 1 in Rückwärtsfahrt ebenfalls eine Linkskurve im Sinne der Richtung B beschreiben, so wird der Handgriff 31 nach vorn gestossen. Dies bewirkt, dass der Getriebeschalthebel 28 im Gegenuhrzeigersinn um die Drehachse 27 in die ausgezogene Lage geschwenkt wird und er die Schwenkachse 26 in Fig. 1 nach links bewegt.

Wenn jetzt gefühlsmässig der Mäherführer den Führungsholm 3 um den Winkel +α aus der Längsmittelebene 43 ausschwenkt, so wird gemäss Fig. 3 das genau gleiche Entkuppeln des Rades 8 und das Antreiben des Rades 9, wie bei der Linkskurve vorwärts, verbleiben, so dass der Mäher wiederum um den Drehpunkt 19 sich in Richtung B bewegt. Das Schwenken des Führungsholmes 3 um den Winkel +α bei einer Linkskurve rückwärts entspricht dem normalen Führungssinn des den Einachsmotormäher 1 Führenden. Wäre diese Umsteuerung der Schwenkachse 26 nicht möglich, so müsste bei dieser Rückwärtslinkskurve der Führung sholm 3 um den Winkel -α nach rechts gedrückt werden, was dem normalen Führungsgefühl widerspricht, unbequem und sehr gefährlich sein kann.

Damit wird erreicht, dass beim Umschalten des Reversiergetriebes im Vorwärts- und Rückwärtsgang gleichzeitig ein Umschalten der Schwenkachse 26 zur Steuerkulisse 25 erfolgt, so dass sowohl beim Vorwärts- als auch beim Rückwärtsfahren das Ausschwenken des Führungsholmes 3 dem normalen Gefühl entsprechend vorgenommen werden kann.

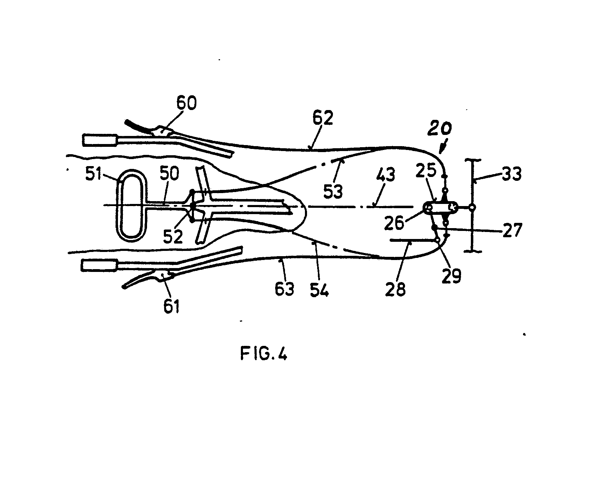

Fig. 4 zeigt zwei weitere Möglichkeiten, um diese Schaltung der Steuerkulisse 25 vor zunehmen, wobei das Umsteuern der Schwenkachse 26 durch die gleichen Elemente in gleicher Form vorgesehen ist, wie dies in den Fig. 1 bis 3 erläutert wurde. Die Betätigung der Steuerkulisse 25 kann entweder mittels eines Lenkkupplungsschalthebels 50 vorgesehen werden, der mittels eines Schwenkhandgriffes 51 nach links oder rechts um eine Drehachse 52 geschwenkt wird, wobei entsprechende Seilzüge 53 bzw. 54 die Steuerkulisse 25 analog dem Gestänge 22 um die Schwenkachse 26 in dieser oder jener Lage schwenken oder mittels zweier Kupplungshebel 60 und 61 die entsprechenden Seilzüge 62 und 63 zum Schwenken der Steuerkulisse 25 verwendet werden.

**Patentansprüche**

1. Einachsmotormäher, insbesondere Breitspurmäher, mit Reversiergetriebe und einer Lenkbremse zum Abkuppeln des einen oder andern Rades (8, 9) von seiner starren Verbindung mit dem Getriebe (7) sowie mit Steuermitteln (26-29, 31), um sowohl beim Vorwärts-als auch beim Rückwärtsfahren auf krummer Bahn (A, B) einen gleichen Krümmungssinn (19) bei gefühlsmässiger und handfester Führung sicherer zu gestalten, dadurch gekennzeichnet, dass die Steuermittel (26-29, 31) eine Lenker-Umsteuerung (25, 26) aufweisen, um bei gleichem Angriffsbereich der Steuerkraft auf den Lenker (25) durch Verschieben der Lenkerschwenkachse (26) die Schwenkrichtung des Lenkers (25) umzukehren.

2. Einachsmotormäher nach Anspruch 1, dadurch gekennzeichnet, dass ein mit der Schwenkachse (26) eines Steuerorgans (25) wirkverbundenes Schaltgestänge (26-29, 31) vorgesehen ist, um durch deren (26) jeweiliges Versetzen sowohl beim Vorwärts- als auch beim Rückwärtsfahren des Mähers ein und dasselbe Rad (8 bzw. 9) vom Antrieb (7) abzukuppeln und/oder dieses Rad (8 bzw. 9) zu bremsen ( 17 bzw. 18), zum Zwecke, eine Bahn mit gleichem Krümmungssinn, aber umgekehrter Drehrichtung, vorzugsweise auf gleichem Kreisbogen, zu erreichen.

3. Einachsmotormäher nach Anspruch 1 oder 2, dadurch gekennzeichnet, dass das Steuerorgan (25) durch Verschwenken des Holmes (3) oder über Seilzüge (53, 54; 62, 63) betätigbar ist.

4. Einachsmotormäher nach einem der Ansprüche 1-3, dadurch gekennzeichnet, dass mittels eines handbetätigbaren Schwenk- oder Zug/Druckgestänges (28) die Schwenkachse (26) des Steuerorgans (25) so verstellbar ist, dass ungeachtet der Ausschwenkrichtung ( +α, -α) des Holmes (3) stets das gleiche Rad (8 bzw. 9) vom Getriebe (7) abkuppelbar (14) und gegebenenfalls bremsbar (17) ist.

**Claims**

1. Single-axle motor-driven mower, especially wide-gauge mower, with a reversing gear and a steering brake for uncoupling one or the other wheel (8, 9) from its rigid connection to the gear (7), and with control means (26 - 29, 31) in order, both during forward movement and during movement in reverse in a curved path (A, B), to follow an identical direction of curvature (19) more reliably, whilst at the same time ensuring sensitive and firm guidance, characterized in that the control means (26 - 29, 31) have a link reversal mechanism (25, 26), in order, when the region where the control force is exerted on the link (25) is the same, to reverse the pivoting direction of the link (25) as a result of a shift of the link pivot axle (26).

2. Single-axle motor-driven mower according to Claim 1, characterized in that a control linkage (26 - 29, 31) connected operatively to the pivot axle (26) of a control member (25) is provided, in order, as a result of the particular shift of the said pivot axle (26), both during the forward movement and the movement in reverse of the mower, to uncouple one and the same wheel (8 or 9), from the drive (7) and/or to brake (17 or 18) this wheel (8 or 9), for the purpose of obtaining a path with the same direction of curvature, but the opposite direction of rotation, preferably over the same arc of a circle.

3. Single-axle motor-driven mower according to Claim 1 or 2, characterized in that the control member (25) is actuable as a result of the pivoting of the spar (3) or via pull cables (53, 54; 62, 63).

4. Single-axle motor-driven mower according to one of Claims 1 to 3, characterized in that, by means of a manually actuable pivoting or pull/push linkage (28), the pivot axle (26) of the control member (25) can be adjusted in such a way that, irrespective of the swing-out direction ( +α, -α,) of the spar (3), the same wheel (8 or 9) can always be uncoupled (14) from the gear (7) and, if appropriate, braked (17).

**Revendications**

1. Motofaucheuse à deux roues, notamment motofaucheuse à large voie, équipée d'une transmission inverseuse et d'un frein de direction servant à débrayer l'une ou l'autre des roues (8, 9) pour supprimer son accouplement rigide avec la transmission (7), ainsi que des moyens de commande (26 à 29, 31), pour rendre plus sûre l'obtention d'un même sens de virage (19) lorsqu'on conduit aussi bien en marche avant qu'en marche arrière sur une trajectoire courbe (A), (B) avec une conduite intuitive et ferme, caractérisée en ce que les moyens de commande (26 à 29, 31) comprennent une commande d'inversion de levier oscillant (25, 26), afin d'inverser, par une translation de l'axe (26) de pivotement du levier oscillant le sens de pivotement de ce levier (25) en conservant la même région d'application de la force de commande au levier (25).

2. Motofaucheuse à deux roues selon la revendication 1, caractérisée en ce qu'il est prévu une tringlerie de commutation (26 à 29, 31) reliée à l'axe de pivotement (26) d'un organe de commande (25), de manière à désaccoupler toujours la même roue (8 ou 9) de la transmission (7) et/ou freiner cette roue (8 ou 9 respectivement) aussi bien en marche avant qu'en marche arrière de la faucheuse, par déplacement correspondant de l'axe de pivotement (26) de cet organe de commande, afin d'obtenir une trajectoire avec le même sens de virage mais avec un sens de rotation inversé, de préférence sur le même arc de cercle.

**0 204 971**

3. Motofaucheuse à deux roues selon la revendication 1 ou 2, caractérisée en ce que l'organe de commande (25) peut être actionné par pivotement du guidon (3) ou encore par l'intermédiaire de câbles (53, 54 ; 62, 63).

4. Motofaucheuse à deux roues selon l'une des revendications 1 à 3, caractérisée en ce que, au moyen d'une tringlerie pivotante ou de traction et de poussée (28), manoeuvrable à la main, l'axe de pivotement (26) de l'organe de commande (25), est déplaçable de telle manière que, quel que soit le sens de pivotement ($+\alpha$, $-\alpha$) du guidon (3), on puisse toujours désaccoupler (14) la même roue (8 ou 9 respectivement) de la transmission (7) et éventuellement freiner (17) cette roue.

FIG.1

FIG.2

FIG.3

FIG. 4